# EUROPEAN PATENT SPECIFICATION

(11) **EP 1 175 826 B1**
(45) Date of publication and mention of the grant of the patent: **17.05.2006**
(21) Application number: 01202673.8
(22) Date of filing: 12.07.2001
(51) Int. Cl.: A01J 25/11, A01J 25/00

(54) **Curd draining apparatus and curd draining process**
Vorrichtung und Verfahren zur Entwässerung von Bruch
Dispositif et procédé de drainage du caillé

(30) Priority: 27.07.2000 IT TO000740
(43) Date of publication of application: 30.01.2002
(73) Proprietor: CMT Costruzioni Meccaniche e Tecnologia S.p.A., I-12010 Peveragno (CN) (IT)
(72) Inventor: Tomatis, Stefano, I-12010 Peveragno (CN) (IT)
(74) Representative: Spandonari, Carlo

(56) References cited:
- DE-A- 2 843 800
- DE-B- 1 297 398
- US-A- 3 193 927
- US-A- 3 841 210
- US-A- 5 669 291

## Description

### DISCLOSURE

This invention is concerned with a curd draining apparatus for use in the cheese industry, as well as with a draining process using the draining apparatus.

As known to the person skilled in the art, in the small-scale production of cheese, the curds developing in the cheesemaking vat, consisting of semisolid flakes of curdled milk and whey, after a desired dwelling time for ripening in the vat, are then poured onto a draining table where the whey is drained off and where the remaining curd is allowed to congeal into a coherent mass, still holding a myriad bubbles of whey. In order to drain even this whey from the mass, the dairyman traditionally slices up the mass of curds into blocks of 10 to 20 cm thickness, and overturns the blocks on the draining table, so that the whey may drip free under the action of gravity. After draining and ripening, the curds are finally hashed and conveyed to different processes in connection with the various types of cheese which are to be made.

In modern industry, the above described traditional procedure is replaced with mechanical handling of one kind or another, such as conveying on perforated belts, squeezing on a table by means of caissons, or tumbling in a perforated barrel. All such manners of treatment have one or more of the following drawbacks: mechanical complexity and difficult cleaning of the belts, difficult delivery of the curds from the barrel at the end of the drying step, inability to maintain the curds immersed in the whey during the initial part of ripening, long time required for drying, etc.

US-A-5 669 291 shows an apparatus for separating whey from a slurry-like material, in which a tapered screen envelopes a correspondingly tapered screw, so that the screw will press the slurry to squeeze its whey out through the perforation of the screen. However, this apparatus, designed for producing "soybean milk" from soybeans, submits the slurry to a compression that would be unsatisfactory when draining milk curds, since the latter are generally required to remain in a soft, flocculated condition.

Accordingly, it is the main object of this invention to provide a curd draining apparatus which can separate the whey from the curds more effectively and more quickly than prior equipment.

Another object is to provide a curd draining apparatus as above, which allows the curds to be easily poured out after drying.

Another object is to provide a curd draining apparatus as above, which can be easily and effectively cleaned by automatic means.

Still another object is to provide a curd draining apparatus as above, which allows the curds to be ripened while immersed in the whey, before draining.

The above and other objects and advantages, such as will appear from the following disclosure, are achieved by the invention by providing a curd draining apparatus having the features set out in claim 1.

The invention also comprises a curd draining process having the features set out in claim 11.

The dependent claims recite other advantageous, though optional, features.

A preferred embodiment of the invention will now be described, by way of nonlimiting example, with reference to the attached drawings, wherein:
Fig. 1 is a view in vertical, longitudinal cross-section of a curd draining apparatus according to a preferred embodiment of the invention;

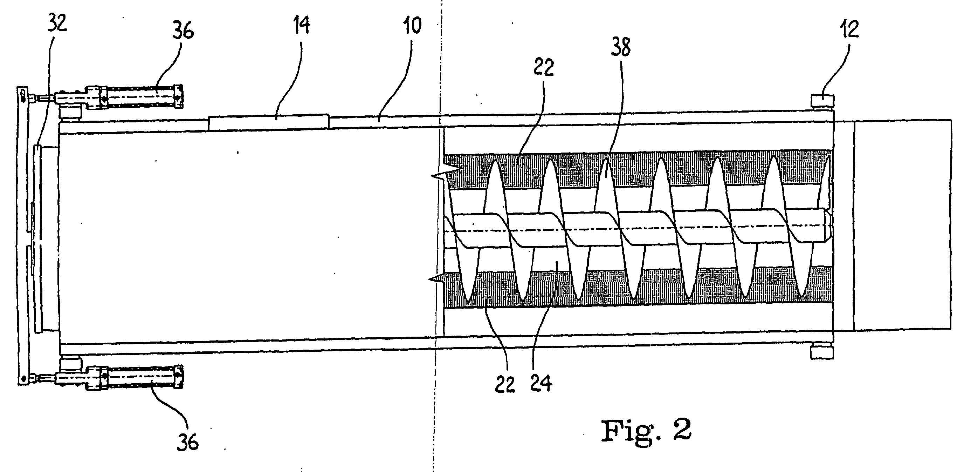

Fig. 2 is a plan view of the draining apparatus of Fig. 1, partly broken away along line A-A of Fig. 1;
Fig. 3 is a view of the draining apparatus of Fig. 1, in transverse cross-section made along line B-B of Fig. 1, on an enlarged scale;

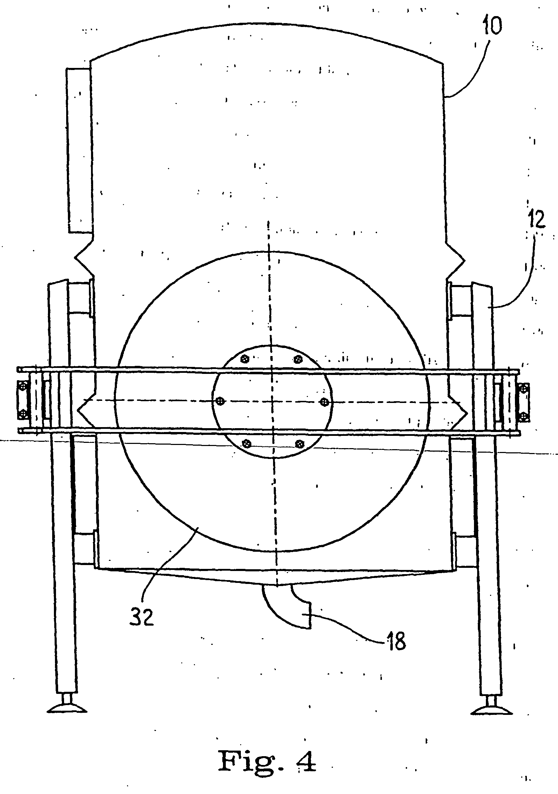

Fig. 4 is a right-hand end view of the draining apparatus of Fig. 1, also on an enlarged scale; and

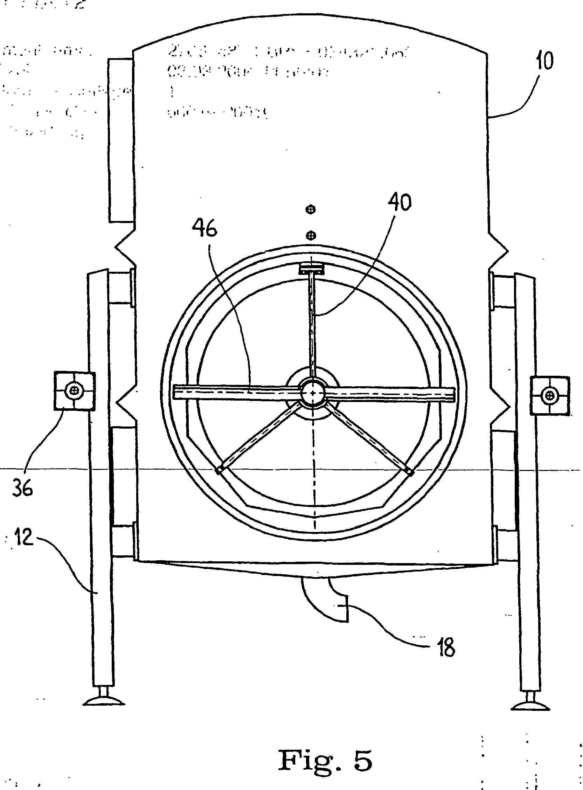

Fig. 5 is a view of the draining apparatus of Fig. 1, in transverse cross-section made along line C-C of Fig. 1, also on an enlarged scale.

With reference to the Figures, the preferred embodiment of the draining apparatus of the invention comprises a vat 10 of metal-plate, which is supported on feet 12. Vat 10 is closed at the top, with normally closed inspection windows 14, and has a inlet 16 for curds and whey and a whey sink 18 at the bottom.

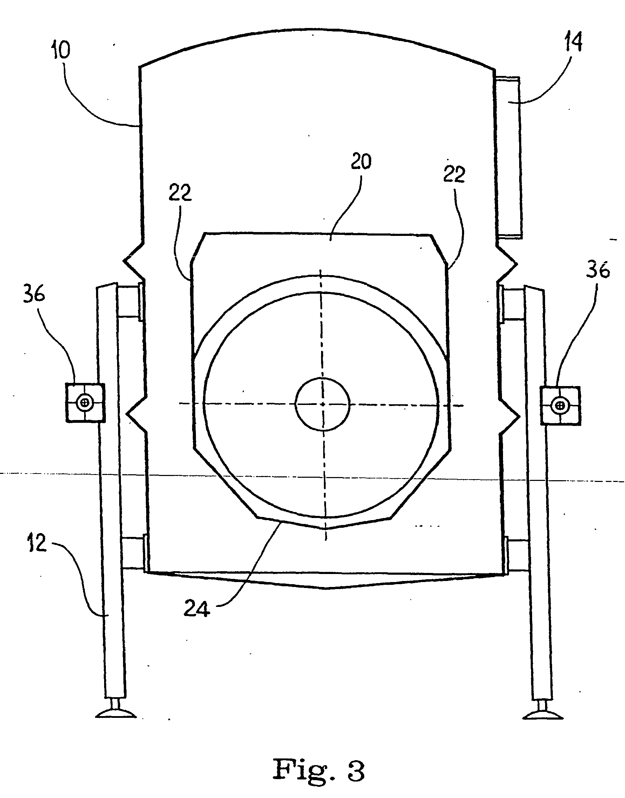

A suspended, U-shaped trough 20 is mounted horizontally in vat 10. Trough 20 has inclined sides 22 (Fig. 3) of perforated metal plate and a bottom 24 of solid plate. Bottom 24 is provided at one end with a whey draining orifice 26 leading to the bottom of vat 10, and normally closed by a shutter 28 which can be operated by a hydraulic cylinder 30 for opening and closing the orifice.

An end wall of vat 10 has a circular aperture 32, encompassed within the profile of trough 20 and normally closed by a cover 34 provided with a sealing gasket 35 and supported by two hydraulic cylinders 36 which are mounted horizontally on the sides of vat 10. Cylinders 36 can be operated to move cover 34 horizontally away from its seat for opening aperture 32.

An auger 38 is rotatably mounted in the trough 20, having one end supported in a spider 40, integral with the vat, and an opposite end passing through a bore in the wall of the vat, and supported in a sealed journal box 42, for instance of the type disclosed in EP-A-0 521 266, so that it is drivable by a reversible motor 44 with reduction gear. The end of the auger supported in spider 40 carries a knife having two radial blades 46. The auger preferably has a pitch of about 15 cm, and generally in the range 10 to 20 cm, although it could be chosen smaller or larger than these values.

In operation, curds and whey are loaded into the above described draining apparatus through inlet 16, from a cheesemaking vat not shown, until trough 20 is filled with curds and whey. The whey will leak to the vat surrounding the trough through its perforated sides 22, up to a level not higher than the upper edge of the trough. Generally, curds are left to ripen within the whey for a dwell period depending on the kind of processing desired. At the end of the dwell period, sink 18 is opened to drain the whey completely from the vat. During the exhaust of the whey, curds will progressively settle in the trough, forming a coherent mass enveloping the auger. In general, the curds will be left to ripen for a further desired period of time.

At the end of ripening, the draining operation is started for the whey that is still incorporated in the curds. This operation consists of a series of cycles of rotation of the auger of about half a turn, first in a forward, then in backward direction, say about ten of such alternate rotations, at short intervals, say of 10 to 20 minutes, between one cycle and the next.

The above described cycles of forward-backward rotation tend to shift the curds by a few centimeters in alternate directions. However, the curd mass which is deposited against the perforated sides of trough 20 partly penetrates the perforations and therefore tends to stick to the walls of trough 20, thereby offering a resistance to shifting. The action of the auger therefore is transformed into a slight compression of the curds, first in one direction, then in the opposite direction, the incorporated whey being thus progressively squeezed out.

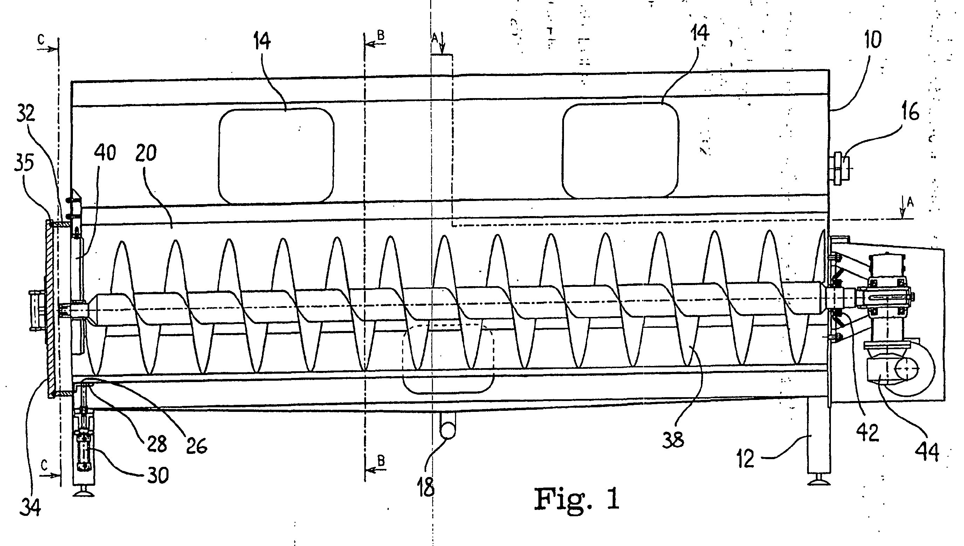

After an adequate number of such compression cycles has been carried out, according to a schedule determined by experience, the curds are delivered from the draining apparatus by opening cover 34 and by operating the auger continuously, so that the curds are pushed leftward on Fig. 1, and come out through aperture 32, thereby undergoing the crumbling action of rotating knife 46 and falling onto an underlying conveyor or other device (not shown) for conveying to subsequent processing.

A person skilled in the art will appreciate that the treatment applied to the curds, while not comprising any slicing of the curd mass, still in practice builds up the equivalent of a ribbon or bar of curds, of a thickness equal to the auger pitch, which should be wound up around the auger axis. From this standpoint, the treatment is equivalent to the traditional, small-scale treatment, whereby the curd mass is sliced into bars 10 to 20 cm thick. However, while the traditional process relies on the inherent weight of the curds in progressively squeezing the whey from the mass, the same result is achieved in the draining apparatus according to the invention by means of a plurality of slight compressions in both directions.

The structure of the draining apparatus also allows an easy, quick and effective cleaning to be carried out at the end of a work session, or even after delivery of each batch of curds and before feeding a fresh batch of curds and ehwy from the cheesemaking vat. Accordingly, after delivery of the ripened curds, cover 34 is again closed, shutter 28 is opened, and the inside of vat 10, now fully enclosed, is sprinkled with a detergent solution from cleaning heads arranged on the inside walls of the vat and not shown for the sake of simplicity and because they are well known to persons skilled in the art. Crumbs and residues of curds which may stick to the perforated walls of trough 20 and to auger 38 are removed by the jets and are washed down to collect on the bottom 24 of trough 20, where they are finally conveyed to draining orifice 26 to drop to the bottom of vat 10 and be exhausted through sink 18. The structure of the draining apparatus is such that there are no recesses that might be unaccessible to the jets from the cleaning heads.

The preferred embodiment of the invention as disclosed above may be variously modified within the scope of the above teaching. For instance, trough 20 could accommodate two or more augers, instead of a single auger as shown. Other members, such as rotating knife 46, could be dispensed with, and both cover 34 and shutter 28 could be differently built or operated. Other changes will be obvious for a person skilled in the art.

## Claims

1. **A curd draining apparatus, comprising:**
an elongated vat (10) having an inlet (16) for curds and whey, a normally closed whey sink (18) and an aperture (32) for the delivery of drained curds provided in an end wall of the vat and normally closed by a sealing cover (34);
a horizontaluntapered trough (20) having perforated walls (22), suspended in the vat at a position beneath said inlet for curds and whey and abutting against the end walls of the vat, and encompassing said aperture for the delivery of drained curds; and
an auger (38) rotatably supported in the trough and driven by motor means (44) adapted to perform alternating rotation.

2. The curd draining apparatus of claim 1, **characterized in that** the vat is provided with complete roofing.

3. The curd draining apparatus of claim 1 or 2, **characterized in that** the perforated walls of the trough blend together at the bottom with the sides of a channel of solid metal plate (24).

4. The curd draining apparatus of claim 3, **characterized in that** the channel of solid metal plate has a draining orifice (26), which is normally closed by a shutter (28) and can be opened for cleaning purposes.

5. The curd draining apparatus of claim 4, **characterized in that** the shutter is a flat plate driven by an actuator (30).

6. The curd draining apparatus of any of claims 1 to 5, **characterized in that** the delivery aperture for the drained curds in one of the end walls of the vat is a circular aperture, and the sealing cover is driven by at least one actuator (36).

7. The curd draining apparatus of claim 6, **characterized in that** said cover is supported by linear actuators mounted on the vat and arranged for causing the translation of the cover between a closed position and an open position.

8. The curd draining apparatus of any of claims 1 to 7, **characterized in that** one or more rotating knives (46) are rotatable in said delivery aperture of the drained curds for slicing the curds as they are fed through the delivery aperture.

9. The curd draining apparatus of claims 7, **characterized in that** each of said rotating knives is keyed to the end of a respective one of said augers.

10. The curd draining apparatus of any of claims 1 to 9, **characterized in that** the pitch of each auger is in the range 10 to 20 cm.

11. A process for draining curds by means of a draining apparatus according to any of claims 1 to 10, **characterized by** the following steps:
- feeding curds and whey to the draining apparatus through the vat inlet for curds and whey until the curds substantially cover the auger(s);
- opening the whey sink in the vat until the whey is entirely exhausted from the vat;
- causing the auger(s) to perform a cycle of limited alternating rotations in opposite directions, whereby the curds around the auger are compressed and the whey is squeezed out from the curds;
- repeating the above compression step at desired time intervals for a desired number of repeats;
- moving the cover away from the curd delivery aperture in the vat and rotate the auger(s) so that all the curds are progressively expelled through said delivery aperture.

12. The curd draining process of claim 11, **characterized in that** said limited alternate rotations in opposite directions are each in the range one quarter turn to one full turn of the auger.

13. The curd draining process of claim 12, **characterized in that** said limited alternate rotations in opposite directions are each of about half a turn.

14. The curd draining process of one of claims 11 to 13, **characterized in that** each of cycles of alternate rotations in opposite directions comprises about ten rotations.

## Patentansprüche

1. Bruchentwässerungsvorrichtung, die ausweist:
- eine längliche Wanne (10) mit einem Einlaß (16) für Bruch und Molke, einen normalerweise geschlossenen Molkeabfluß (18) und eine Öffnung (32) zur Abgabe entwässerten Bruchs, die in einer Stirnwand der Wanne vorgesehen und normalerweise von einem abdichtenden Deckel (34) verschlossen ist,
- einen horizontalen, nicht verjüngenden Trog (20) mit perforierten Wänden (22), der in der Wanne an einer Stelle unterhalb des Einlasses für Bruch und Molke gehalten ist und gegen die Stirnwände der Wanne stoßt und der die Öffnung zur Abgabe entwässerten Bruchs umfaßt, und
- eine oder mehrere drehbar in dem Trog abgestützte und durch Motormittel (44) angetriebene Schnecken (38), die eine wechselweise Drehung auszuführen vernaögan.

2. Bruchentwässerungsvorrichtung nach Anspruch 1, **dadurch gekennzeichnet, dass** die Wanne mit einer vollständigen Überdeckung versehen ist,

3. Bruchentwässerungsvorrichtung nach Anspruch 1 oder 2, **dadurch gekennzeichnet, dass** die perforierten Wände des Troges am Boden in die Seiten eines Kanals aus massivem Metallblech (24) übergehen.

4. Bruchentwässerungsvorrichtung nach Anspruch 3, **dadurch gekennzeichnet, dass** der Kanal aus massivem Metallblech eine Drainageöffnung (26) aufweist, die normalerweise durch einen Verschluss (28) verschlossen ist und zu Reinigungszwecken geöffnet werden kann.

5. Bruchentwässerungsvorrichtung nach Anspruch 4, **dadurch gekennzeichnet, dass** der Verschluss ein von einem Aktuator (30) angetriebenes flaches Blech ist.

6. Bruchentwässerungsvorrichtung nach einem der Ansprüche 1 bis 5, **dadurch gekennzeichnet, dass** die Abgabeöffnung für den entwässerten Bruch in einer der Stirnwande der Wanne eine kreisförmige Öffnung ist und dass der abdichtende Deckel von wenigstens einem Aktuator (36) angetrieben ist.

7. Bruchentwässerungsvorrichtung nach Anspruch 6, **dadurch gekennzeichnet, dass** der Deckel durch auf der Wanne angebrachte Linearaktuatoren gehalten ist, die zum Bewirken der Translation des Deckels zwischen einer Schließstellung und einer Offenstellung angeordnet sind.

8. Bruchentwässerungsvorrichtung nach einem der Ansprüche 1 bis 7, **dadurch gekennzeichnet, dass** ein oder mehrere rotierende Messer (46) in der Abgabeöffnung für entwässerten Bruch drehbar sind, um den Bruch zu schneiden, wenn er durch die Abgabeöffnung geführt wird.

9. Bruchentwässerungsvorrichtung nach Anspruch 1, **dadurch gekennzeichnet, dass** jedes der rotierenden Messer mit dem Ende einer entsprechenden der Schnecken verkeilt ist.

10. Bruchentwässerungsvorrichtung nach einem der Ansprüche 1 bis 9, **dadurch gekennzeichnet, dass** die Steigung jeder Schnecke im Bereich von 10 bis 20 cm liegt.

11. Verfahren zum Entwässern von Bruch mittels einer Entwässerungsvorrichtung nach einem der Ansprüche 1 bis 10, **gekennzeichnet durch** die folgenden Schritte:
- Zufuhren von Bruch und Molke zu der Entwässerungsvorrichtung **durch** den Wanneneinlass für Bruch und Molke, bis der Bruch die Schnecke(n) im Wesentlichen bedeckt,
- Öffnen des Molkeabflusses in der Wanne, bis die Molke vollständig aus der Wanne entwichen ist,
- Veranlassen, dass die Schnecke(n) einen Zyklus begrenzter alternierender Drehungen in entgegengesetzte Richtungen ausführt, wodurch der Bruch um die Schnecke komprimiert und die Molke aus dem Bruch gequetscht wird,
- Wiederholen des obenstehenden Komprimierungsschritts in gewünschten Zeitintervallen für eine gewünschte Anzahl von Wiederholungen,
- Bewegen des Deckels weg von der Bruchabgabeoffnung in der Wanne und Drehen der Schnecke(n), so dass all der Bruch nach und nach **durch** die Abgabeöffnung ausgestoßen wird.

12. Bruchentwässerungsverfahren nach Anspruch 11, **dadurch gekennzeichnet, dass** die begrenzten alternierenden Drehungen in entgegengesetzte Richtungen jeweils im Bereich einer Vierteldrehung bis zu einer vollen Drehung der Schnecke liegen.

13. Bruchentwässerungsverfahren nach Anspruch 12, **dadurch gekennzeichnet, dass** die begrenzten alternierenden Drehungen in entgegengesetzte Richtungen jeweils etwa eine halbe Drehung sind.

14. Bruchentwässerungsverfahren nach einem der Ansprüche 11 bis 13, **dadurch gekennzeichnet, dass** jeder Zyklus alternierender Drehungen in entgegengesetzte Richtungen ungefähr zehn Drehungen umfasst.

## Revendications

1. Appareil de drainage du caillé, comprenant:
- une cuve allongée (10) ayant une entrée (16) pour le caillé et le petit-lait, un puits à petit-lait (18) normalement fermé et une ouverture (32) pour la distribution de caillé drainé, ménagée dans une paroi d'extrémité de la cuve et normalement fermée par un couvercle étanche (34) ;
- une auge horizontale non-fuselée (20) ayant des parois perforées (22), suspeudue dans la cuve dans une position située sous ladite entrée pour le caillé et le petit-lait et venant en butée contre les parois d'extrémité de la cuve, et comprenant ladite ouverture pour la distribution du caillé drainé ; et
- une vrille (38) supportée en rotation dans l'auge et commandée par des moyens motorisés (44) adaptes pour réaliser une rotation alternée.

2. Appareil de drainage du caillé selon la revendication 1, **caractérisé en ce que** la cuve est dotée d'un toit complet.

3. Appareil de drainage du caillé selon la revendication 1 ou 2, **caractérisé en ce que** les parois perforées de l'auge sont raccordées dans le fond avec les côtés d'un canal de plaque métallique solide (24).

4. Appareil de drainage du caillé selon la revendication 3, **caractérisé en ce que** le canal de plaque métallique solide a un orifice de drainage (26) qui est normalement fermé par un obturateur (28) et peut être ouvert dans un but de nettoyage.

5. Appareil de drainage du caillé selon la revendication 4, **caractérisé en ce que** l'obturateur est une plaque plate commandée par un actionneur (30).

6. Appareil de drainage du caillé selon l'une quelconque des revendications 1 à 5, **caractérisé en ce que** l'ouverture de distribution du caillé drainé dans l'une des parois d'extrémité de la cuve est une ouverture circulaire, et le couvercle étanche est commandé par au moins un actionneur (36).

7. Appareil de drainage du caillé selon la revendication 6, **caractérisé en ce que** ledit couvercle est supporté par des actionneurs linéaires montés sur la cuve et disposés de façon à provoquer la translation du couvercle entre une position fermée et une position ouverte.

8. Appareil de drainage du caillé selon l'une quelconque des revendications 1 à 7, **caractérisé en ce qu'**un ou plusieurs couteaux rotatifs (46) peuvent tourner dans ladite ouverture de distribution du caillé drainé pour trancher le caillé quand il est alimenté par l'ouverture de distribution.

9. Appareil de drainage du caillé selon la revendication 7, **caractérisé en ce que** chacun desdits couteaux rotatifs est claveté à l'extrémité d'une vrille respective desdites vrilles.

10. Appareil de drainage du caillé selon l'une quelconque des revendications 1 à 9, **caractérisé en ce que** le pas de chaque vrille est dans la gamme de 10 à 20 cm.

11. Procédé de drainage du caillé, au moyen d'un appareil de drainage selon l'une quelconque des revendications 1 à 10, **caractérisé par** les étapes suivantes :
- distribution du caillé et du petit-lait dans l'appareil de drainage à travers l'entrée de la cuve pour caillé et petit-lait jusqu'à ce que le caillé couvre sensiblement la (les) vrille(s) ;
- ouverture du puits de petit-lait dans la cuve jusqu'à ce que le petit-lait soit totalement sorti de la cuve ;
- réalisation, par la (les) vrille(s), d'un cycle de rotations alternées limitées dans des directions opposées, moyennant quoi le caillé situé autour de la vrille est comprimé et le petit-lait est séparé par compression du caillé ;
- répétition de la phase de compression ci-dessus à intervalles de temps souhaités pour un nombre de répétitions souhaité ;
- placement du couvercle à l'écart de l'ouverture de distribution du caillé dans la cuve et rotation de la (les) vrille(s) de sorte que tout le caillé soit progressivement expulsé à travers ladite ouverture de distribution.

12. Procédé de drainage du caillé selon la revendication 11, **caractérisé en ce que** lesdites rotations alternées limitées dans des directions opposées sont chacune dans la plage d'un quart de tour à un tour complet de la vrille.

13. Procédé de drainage du caillé selon la revendication 12, **caractérisé en ce que** lesdites rotations alternées limitées dans des directions opposées sont chacune d'environ un demi-tour.

14. Procédé de drainage du caillé selon l'une des revendications 11 à 13, **caractérisé en ce que** chacun des cycles de rotations alternées dans des directions opposées comprend environ dix rotations.
